# EUROPÄISCHE PATENTSCHRIFT

(11) **EP 1 759 329 B1**
(45) Veröffentlichungstag und Bekanntmachung des Hinweises auf die Patenterteilung: **06.08.2008**
(21) Anmeldenummer: 05731718.2
(22) Anmeldetag: 12.04.2005
(51) Int. Cl.: G06K 9/00, B60R 21/01, B60N 2/00

(54) **VERFAHREN ZUR KALIBRIERUNG EINER SENSORIK ZUR FAHRZEUGINNENRAUMÜBERWACHUNG**
METHOD FOR CALIBRATING A SENSOR IN ORDER TO MONITOR THE PASSENGER COMPARTMENT OF A MOTOR VEHICLE
PROCEDE POUR CALIBRER UN SYSTEME DE CAPTEURS POUR LA SURVEILLANCE DE L'ESPACE INTERIEUR D'UN VEHICULE

(30) Priorität: 09.06.2004 DE 102004028090
(43) Veröffentlichungstag der Anmeldung: 07.03.2007
(73) Patentinhaber: ROBERT BOSCH GMBH, 70442 Stuttgart (DE)
(72) Erfinder: BOTHE, Hans-Dieter, 30926 Seelze (DE); ABRAHAM, Steffen, 31134 Hildesheim (DE)
(86) Internationale Anmeldenummer: PCT/EP2005/051599
(87) Internationale Veröffentlichungsnummer: WO 2005/122058

(56) Entgegenhaltungen:
- WO-A-20/04094196
- DE-A1- 4 439 298
- DE-A1- 10 226 257
- DE-A1- 19 757 595
- US-A1- 2002 072 869
- SU-BIRM PARK: "Optische Kfz-Innenraumüberwachung (Auszug)" DOKTORARBEIT, FB ELEKTROTECHNIK, UNIVERSITÄT DUISBURG, 17. Oktober 2000 (2000-10-17), XP002336745

## Beschreibung

### Stand der Technik

Die Erfindung geht aus von einem Verfahren zur Kalibrierung einer Sensorik zur Fahrzeuginnenraumüberwachung nach der Gattung der unabhängigen Patentansprüche 1 oder 6.

Eine wichtige Anwendung für eine solche Sensorik zur Überwachung des Fahrzeuginnenraums ist eine intelligente Airbagsteuerung, bei der beispielsweise die Sitzbelegungen im Fahrzeug klassifiziert werden, um Verletzungen durch die Auslösung des Airbags beispielsweise bei rückwärts eingebauten Kindersitzen oder bei einer Out-of-Position-Detektion zu verhindern. Bei der Out-of Position-Deteküon wird erkannt, dass die Position des Insassen nicht einer Normalposition entspricht, d.h. es wird bei der Überwachung der Position von Körperteilen, wie des Kopfes oder des Rumpfes der Insassen bzw. deren Sitzhaltung bezüglich des Airbagmoduls beispielsweise eine zu dichte Positionierung des Kopfes am Airbagmodul erkannt Durch die Out-of-Position-Detektion des Kopfes wird somit eine Airbagauslösung verhindert, um Verletzungen zu vermeiden. Zur Innenraumüberwachung können verschiedene Sensortypen eingesetzt werden.

Zur Klassifikation und Out-of Position-Detektion der Sitzbelegungen im Fahrzeuginnenraum für die intelligente Airbagsteuerung wird eine geometrische Lagerelation zwischen Messdaten und Fahrzeuginnenraum hergestellt. Dies erfolgt in der Regel über ein mathematisches Modell, welches die Messwerterfassung beschreibt. Es enthält numerische Kalibrierparameter, die die Lage des Sensors bezüglich des Fahrzeuges beschreiben, so genannte extrinsische Parameter, und numerische Kalibrierparameter, welche die Messwerterfassung im Sensor charakterisieren, so genannte intrinsische Parameter. Nach Inbetriebnahme der Vorrichtung im Fahrzeug müssen die Kalibrierparameter im System bekannt sein oder bestimmt werden. Während des Sensorbetriebes sind die Kalibrierparameter zu kontrollieren und gegebenenfalls nachzuführen.

Im europäischen Patent EP 0 885 782 B1 wird eine Vorrichtung zur Feststellung der Anwesenheit von einem Fahrgast in einem Fahrzeug beschrieben. Die Vorrichtung bestimmt über eine Stereoauswertung von zwei oder mehreren Bildaufnahmesensoren geometrische Merkmale des Raumes. Diese geometrischen Merkmale werden von einem Bildanalysator dahingehend ausgewertet, ob sich ein Objekt, d.h. ein Kindersitz oder eine Person auf dem Fahrzeugsitz befindet.

In den Dokumenten WO 99/34235 und DE 44 39 298 A1 werden Vorrichtungen beschrieben, welche die geometrischen Merkmale des Raumes über spezielle optische Entfernungsbild-Sensoren, "range video cameras", z.B. Laufzeitsensoren (Time-Of Flight-Sensoren) bzw. Sensoren mit Phasenmessung direkt messen.

Zur Kalibrierung von Sensoren zur Fahrzeuginnenraumüberwachung sind Verfahren bekannt, bei welchen geeignete Kalibrierkörper mit vorab bekannter 3D-Struktur in den Fahrzeuginnenraum eingebracht werden, die mit der zu kalibrierenden Sensorik vermessen werden und aus denen dann die Kalibrierdaten bestimmt werden. Um die Messgenauigkeit dauerhaft garantieren zu können, muss diese Kalibrierprozedur in bestimmten Zeitabständen wiederholt werden. Diese zeitaufwendige Vorgehensweise ist für eine Sensorik im Fahrzeug aufgrund der damit verbundenen Kosten und mangelhafter Servicefreundlichkeit nicht einsetzbar.

Im europäischen Patent EP 1 031476 B1 wird als Kalibriervorgang eine manuelle mechanische Feineinstellung eines Sensors zur Fahrzeuginnenraumüberwachung beschrieben. Im beschriebenen Verfahren wird ein spezielles Testmuster in den Fahrzeuginnenraum eingebracht, über dessen Abbild die manuelle mechanische Feineinstellung des Sensors erfolgt. Die Kalibrierparameter, hier die geometrische Lage des Sensors, werden durch die Einhaltung enger Einbautoleranzen eingehalten.

Aus Su-Birm Park 2000, Seite 75 bis 77 ist es bekannt, dass eingebaute Kamerasysteme in einem Fahrzeug kalibriert werden müssen. Aus DE 197 57 595 A1 ist es bekannt ein Verfahren und eine Vorrichtung zur Aufnahme eines dreidimensionalen Abstandbilds vorzunehmen. Dabei wird ein gleichzeitiges Erzeugen eines Grauwerts bzw. Intensitätsbilds, und eines dreidimensionalen Abstandbilds vom räumlichen Objekt vorgenommen. Eine Kurzzeitbeleuchtung, beispielsweise durch LED-Dioden des Objekts wird dabei durchgeführt. Als Bildsensor wird ein Sensor mit hoher Lichtempfindlichkeit eingesetzt, der pixelauflösend und wahlfrei auslesbar ist, sowie eine für jeden Pixel einstellbare Integrationszeit aufweist. Als Ergebnis lassen sich dreidimensionale Abstandsbilder mit hoher Zuverlässigkeit beispielsweise in 5 Nanosekunden aufnehmen. Aus DE 102 26 257 A1 ist ein Verfahren zur Detektion einer Person in einem Raum bekannt. Dabei wird ein Tiefensensor verwendet, um räumliche Daten über den zu beobachtenden Raum zu erzeugen, wobei für wenigstens ein vorgegebenes Körperteil eines Menschen wenigstens einen in weitere Teilmodelle unterteilbares Teilmodell verwendet wird. Wobei die räumlichen Daten zur Anpassung der Teilmodelle verwendet werden, wobei die Anpassung durch Lageparameter zwischen den Teilmodellen unterschiedlicher Körperteile überprüft wird und die Person mittels eines Gesamtmodells aus dem geprüften Teilmodellen erkannt wird. Die WO 2004/094196, als PCT/ DE2004/000305 angemeldet am 19. Februar 2004, aber erst veröffentlicht am 4. November 2004, offenbart ein der Erfindung ähnliches Verfahren. Sie offenbart jedoch keine räumliche Abstandsmessung wie in Anspruch 1 gefordert und ist somit gemäß Artikel 54(3,4) EPÜ nicht zu betrachten.

### Vorteile der Erfindung

Die erfindungsgemäßen Verfahren zur Kalibrierung einer Sensorik zur Fahrzeuginnenraumüberwachung mit den Merkmalen der unabhängigen Patentansprüche 1 oder 6 haben den Vorteil, dass Kalibrierparameter zur Überwachung und Nachführung der Sensorik zur Fahrzeuginnenraumüberwachung unter Verwendung von 3D-Oberflächenmodellen des Kfz-Innenraums automatisch bestimmt werden. Dazu werden 3D-Oberflächendaten von ausgewählten Objekten des Fahrzeuginnenraums direkt oder nach Erzeugen einer Disparitätskarte zur Kalibrierung der Sensorik verwendet. Durch die 3D-Oberflächendaten ist die geometrische Lage von ausgewählten Objekten im Fahrzeuginnenraum bekannt und kann mit der von der Sensorik ermittelten geometrischen Lage zur Generierung von Kalibrierparametern verglichen werden. Das erfindungsgemäße Verfahren benutzt in vorteilhafter Weise vorhandenes Wissen zu Objekten, die mit der Sensorik beobachtet werden. Unter Kalibrierung wird bei der vorliegenden Erfindung die Bestimmung, Kontrolle und Korrektur der Kalibrierparameter verstanden.

Durch die in den abhängigen Ansprüchen aufgeführten Maßnahmen und Weiterbildungen sind vorteilhafte Verbesserungen der in den unabhängigen Patentansprüchen angegebenen Kalibrierverfahren möglich.

Besonders vorteilhaft ist, dass durch die automatische Überwachung der Kalibrierparameter, die Sensorik für sicherheitskritische Anwendungen im Fahrzeuginnenraum angewendet werden kann. Zudem verringert die erfindungsgemäße automatische Bestimmung der Kalibrierparameter, z.B. einer geometrischen Lage der Sensorik im Fahrzeuginnenraum, den Aufwand bei der Sensormontage im Fahrzeug, da spezielle Kalibrierverfahren während der Fertigung, bei Reparaturarbeiten oder enge Fertigungstoleranzen, die zur Einhaltung von Kalibrierparametern spezifiziert wurden, entfallen. Durch die automatische Überwachung können auch während des Betriebs Veränderungen der Lage der Sensorik bezüglich des Fahrzeuginnenraumes oder der Abbildung in der Sensorik, die eine Fehlfunktion verursachen, erkannt und/oder korrigiert werden. Das bedeutet, dass ein Veränderung der Kalibrierparameter und/oder der Einstellparameter bei der Messwerterfassung der Sensorik, die zu einer Beeinträchtigung der gewonnenen Messdaten oder zu einer Fehlfunktion des Systems führen können, automatisch erkannt und nachgeführt werden.

Für die automatische Überwachung der Kalibrierparameter und den Kalibriervorgang der Sensorik für den Fahrzeuginnenraum wird ein 3D-Oberflächenmodell von ausgewählten Bezugsobjekten des Fahrzeuginnenraums verwendet. Dies können beispielsweise die A, B oder C-Säule der Karosserie, die Türen oder die Mittelkonsole des Fahrzeugs sein. Die Bezugsobjekte werden mit der Sensorik beobachtet und die zugehörigen 3D-Meßdaten aus der Sensorik werden mit den Solldaten aus dem 3D-Oberflächenmodell verglichen. Anhand der Differenzen zwischen den Messdaten und den Solldaten wird die Funktion der Sensorik überwacht und/oder die Sensorik kalibriert. Das 3D-Oberflächenmodell wird in vorteilhafter Weise aus vorhandenen CAD-Daten des Fahrzeugs abgeleitet Durch die Verwendung der im Fahrzeuginnenraum vorhandenen Bezugsobjekte ist eine Installation von speziellen Bezugsobjekten nicht zwingend erforderlich.

Zusätzlich zu den ohnehin im Fahrzeuginnenraum vorhandenen Bezugsobjekten können auch spezielle vorzugsweise signalisierende Bezugsobjekte verwendet werden. Diese speziellen Bezugsobjekte lassen sich in vorteilhafter Weise besonders einfach und zuverlässig im Bild detektieren bzw. besonders präzise vermessen. Zudem können die Oberflächendaten der speziellen Bezugsobjekte mit hoher Genauigkeit gespeichert werden. Da die 3D-Messdaten unempfindlich gegenüber Modifikationen an der Oberflächenbeschaffenheit, z.B. unterschiedliche Reflektanzen je nach Fahrzeuginnenraumausstattung, der Fahrzeuginnenraumverkleidung sind, wird die Robustheit des Verfahrens erhöht Zudem wird die Adaption der Sensorik an verschiedene Fahrzeugvarianten mit unterschiedlichen Innenraumverkleidungen erleichtert. Die Adaption besteht nur in der Übergabe der CAD-Daten der zu verwendenden Bezugsobjekte an eine Auswerte- und Steuereinheit, die das Kalibrierverfahren steuert.

### Zeichnung

Ausführungsbeispiele der Erfindung sind in der Zeichnung dargestellt und werden in der nachfolgenden Beschreibung näher erläutert.

Es zeigen
- Figur 1: eine schematische Darstellung eines Fahrzeugs mit einer Sensorik zur Fahrzeuginnenraumüberwachung
- Figur 2: eine schematische Darstellung eines Vergleichs von Messwerten der Sensorik aus Fig. 1 mit vorgegebenen Sollwerten, und
- Figur 3: ein Blockdiagramm eines Verfahrens zur Kalibrierung einer Sensorik zur Fahrzeuginnenraumüberwachung.

### Beschreibung

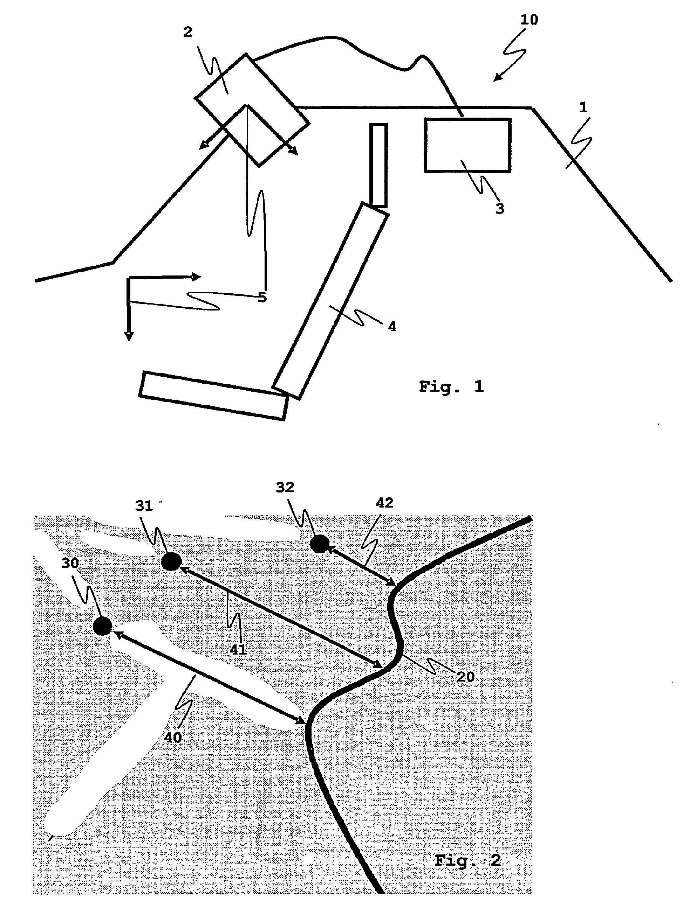

Fig. 1 zeigt ein Fahrzeug 10 mit einer Sensorik 2 zur Überwachung eines Fahrzeuginnenraums 1 und einer an die Sensorik 2 angeschlossenen Auswerte- und Steuereinheit 3. Die Abbildung stellt die notwendige Überwachung der Kalibrierparameter, speziell der Lage der Sensorik 2 bezüglich des Fahrzeuginnenraumes 1 mit einem Fahrzeugsitz 4 dar. Die Lagerelation der Sensorik 2 bezüglich des Fahrzeuginnenraums ist durch die Pfeile 5 repräsentiert.

Vor der Inbetriebnahme werden CAD-Daten über die geometrische Lage von Oberflächen von ausgewählten Bezugsobjekten im Fahrzeuginnenraum 1, wie beispielsweise der A-, B-, C-Säule, Türen, Armaturenbrett mit Airbagklappe usw., in der Auswerte- und Steuereinheit 3 abgelegt. Die CAD-Daten werden beispielsweise als triangulierte Oberflächenstruktur in der Auswerte- und Steuereinheit 3 abgelegt. Während des Betriebs werden von der Sensorik 2 3D-Messungen des Fahrzeuginnenraums 1 durchgeführt und entsprechende Messdaten generiert. Die von der Sensorik 2, die beispielsweise einen Stereo-Video-Sensor umfasst, durchgeführten 3D-Messungen sind in Fig. 2 als 3D-Punkte 30, 31, 32 dargestellt und weisen jeweils x, y, z-Koordinaten auf. Die Messpunkte 30, 31, 32, welche zu ausgewählten Bezugsobjekten gehören, werden von der Auswerte- und Steuereinheit 3 automatisch detektiert. Die Auswerte- und Steuereinheit ermittelt die Abstände 40, 41, 42 der 3D-Messpunkte 30, 31, 32 zu der aus den CAD-Daten der ausgewählten Bezugsobjekte gebildeten 3D-Oberfläche 20. Aus den ermittelten Abständen 40, 41, 42 werden zu große Abweichungen der Kalibrierparameter, d.h. Dekalibrierungen erkannt oder es werden Kalibrierparameter über ein mathematisches Modell der Sensorabbildung errechnet Zusätzlich oder alternativ können 2D-Merkmale in einem von der Sensorik aufgenommenen Bild als zusätzliche Messpunkte in den Kalibriervorgang aufgenommen und berücksichtigt werden.

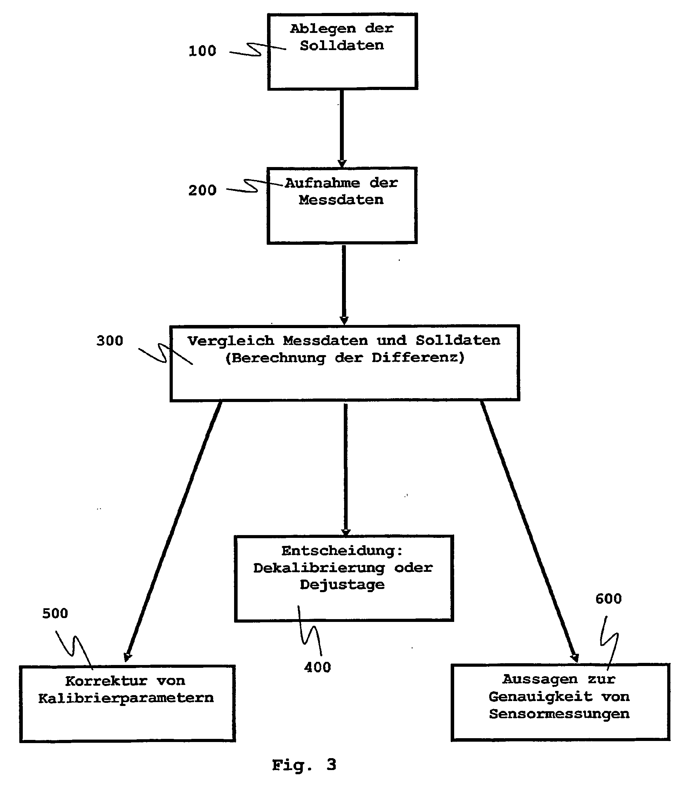

Wie aus Fig. 3 ersichtlich ist, umfasst das erfindungsgemäße Verfahren zur Kalibrierung der Sensorik 2 zur Fahrzeuginnenraumüberwachung einen Block 100, in dem die als Solldaten aufgenommenen 3D-Oberflächendaten 20 von ausgewählten Objekten des Fahrzeuginnerraums 1, beispielsweise in der Auswerte- und Steuereinheit 3 abgelegt werden. Die ausgewählten Objekte können zusätzlich zu den im Fahrzeuginnerraum ohnehin vorhandenen Objekten spezielle und/oder signalisierende Objekte umfassen. Die Signalisierung kann ein statisches und/oder dynamisches Leuchten, welches beispielsweise von Leuchtdioden erzeugbar ist, und/oder eine bestimmte Objektform, wie beispielsweise Kreise, konzentrische Kreise, Linien, Doppellinien usw., und/oder eine Objektreffektanz, z.B. sehr helle Objekte, retroreflektierende Objekte usw., umfassen, In einem nachfolgenden Block 200 werden von der Sensorik 2 3D-Messungen des Fahrzeuginnenraums durchgeführt und aktuelle Messdaten 30, 31, 32 des Fahrzeuginnenraums 1 aufgenommen. Die 3D-Messpunkte werden beispielsweise mit einem Stereo-Videosensor oder mit einem Video-Sensor und strukturierter Beleuchtung gemessen. Die 3D-Messpunkte können aber auch beispielsweise mit einem Sensor nach dem Time-of Flight-Messprinzip über eine Phasenmessung oder einer Laufzeitmessung ermittelt werden. Bei der Phasenmessung wird der Fahrzeuginnenraum mit moduliertem Licht beleuchtet und die Phase des reflektierten Lichts gemessen. Bei der Laufzeitmessung wird der Fahrzeuginnenraum mit gepulstem Licht beleuchtet und die Laufzeit des reflektierten Lichts gemessen. In einem Block 300 werden die aktuellen Messdaten 30, 31, 32 aus Block 200 mit den abgelegten Solldaten 20 aus Block 100 verglichen und räumliche Abstände 40, 41, 42 der Messdaten 30, 31, 32 von den Solldaten 20 berechnet. Anhand der berechneten räumlichen Abstände 40, 41, 42 kann die Sensorik 2 überwacht und im Block 400 eine Dekalibrierung, eine Verstellung oder ein Änderung in der Messwerterfassung des Sensorik erkannt werden, die zu einer Beeinträchtigung der gewonnen Messdaten oder zu einer Fehlfunktion der Innenraumüberwachung führen können. Aus den räumlichen Abständen 40, 41, 42 werden im Schritt 500 die Kalibrierparameter zur Korrektur der Messdaten bestimmt. Zudem werden im Block 600 Aussagen zur Messgenauigkeit und Zuverlässigkeit der Sensorik 2 abgeleitet.

Die 3D-Oberflächendaten für die Kalibrierung werden beispielsweise aus vorhandenen CAD-Daten des Fahrzeuginnenraums generiert und in der Auswerte- und Steuereinheit 3 abgelegt. Für den Vergleich mit den aktuellen Messdaten können die 3D-Oberlächendaten der ausgewählten Objekte des Fahizeuginnenraumes direkt verwendet werden. Alternativ kann aus den 3D-Oberflächendaten eine Disparitätskarte berechnet werden. Bei der Auswertung im Schritt 300 werden dann Differenzen zwischen Disparitätsmessungen in einem Stereosensor und der generierten Disparitätskarte bestimmt. Die Sensorik 2 kann bildaufnehmende oder entfemungsmessende Sensoren umfassen.

Alternativ oder zusätzlich zu den CAD-Daten können die 3D-Oberflächendaten durch eine einmalige Vermessung des Fahrzeuginnenraums 1 generiert werden. Mögliche Messverfahren zur Vermessung des Fahrzeuginnenraums sind Photogrammetrie, Streifenprojektion und/oder Verwendung von Laser-Stripe-Sensoren.

Durch die Nutzung der Oberflächendaten von ausgewählten bauartbedingten im Fahrzeug vorhandener Objekte wird eine einfache und schnelle Kalibrierung der Sensorik zur Fahrzeuginnenraumüberwachung für die Steuerung eines Airbagsystems ermöglicht, die durch Verwendung von zusätzlichen speziellen und/oder signalisierenden Objekten noch verbessert werden kann, da mit diesen zusätzlichen Objekten besonders genaue Oberflächendaten einfach und zuverlässig detektiert und vermessen werden können. Dadurch können Lageänderungen der Sensorik bzw. eine Verstellung der Sensorik schnell erkannt und korrigiert werden.

Die Funktionen des Airbagsystems können über Statusanzeigen wie "Airbag defekt", "Airbag unterdrückt" usw. signalisiert werden. Wird nach einer Lageänderung der Sensorik 2 bei der Auswertung beispielsweise eine Dekalibrierung der Sensorik erkannt, die nicht durch entsprechende Kalibrierparameter korrigiert werden kann, dann meldet die Statusanzeige beispielsweise "Airbag gestört". Ist die Auswerte- und Steuereinheit 2 nach einer mechanischen Verstellung der Sensorik 2 in der Lage die mechanische Verstellung durch entsprechende Kalibrierparameter zu korrigieren, dann ist das Airbagsystem nicht gestört und die positionsabhängige Airbagunterdrückung wird weiterhin korrekt vorgenommen.

## Patentansprüche

1. Verfahren zur Kalibrierung einer Sensorik (2) zur Überwachung eines Fahrzeuginnenraums (1), **dadurch gekennzeichnet, dass** aktuelle 3D-Messpunkte (30, 31, 32) gemessen werden und zur Kalibrierung der Sensorik (2) ein räumlicher Abstand (40, 41, 42) zwischen den gemessenen 3D-Messpunkten (30, 31, 32) und abgelegten 3D-Oberflächendaten (20) von ausgewählten Objekten des Fahrzeuginnenraums (1) ermittelt wird.

2. Verfahren nach Anspruch 1, **dadurch gekennzeichnet, dass** die 3D-Messpunkte (30, 31, 32) von einem Videosensor, vorzugsweise einem Stereo-Videosensor, gemessen werden.

3. Verfahren nach Anspruch 1 oder 2, **dadurch gekennzeichnet, dass** die 3D-Messpunkte (30, 31, 32) mit einer strukturierten Beleuchtung, vorzugsweise vom Videosensor, gemessen werden.

4. Verfahren nach einem der Ansprüche 1 bis 3, **dadurch gekennzeichnet, dass** die 3D-Messpunkte (30,31,32) über eine Phasenmessung, vorzugsweise vom Videosensor, gemessen werden, wobei der Fahrzeuginnenraum (1) mit moduliertem Licht beleuchtet und die Phase des reflektierten Lichts gemessen wird.

5. Verfahren nach einem der Ansprüche 1 bis 4, **dadurch gekennzeichnet, dass** die 3D-Messpunkte (30, 31, 32) über eine Laufzeitmessung, vorzugsweise vom Videosensor, gemessen werden, wobei der Fahrzeuginnenraum (1) mit gepulstem Licht beleuchtet und die Laufzeit des reflektierten Lichts gemessen wird.

6. Verfahren zur Kalibrierung einer Sensorik (2) zur Überwachung eines Fahrzeuginnenraums (1), **dadurch gekennzeichnet, dass** mit der Sensorik (2) Disparitätsmessungen durchgeführt werden und zur Kalibrierung der Sensorik (2) Differenzen zwischen den Disparitätsmessungen der Sensorik (2) und einer Disparitätskarte ermittelt werden, die aus 3D-Oberflächendaten von ausgewählten Objekten des Fahrzeuginnenraums (1) erzeugt und abgelegt werden.

7. Verfahren nach einem der Ansprüche 1 bis 6, **dadurch gekennzeichnet, dass** die 3D-Oberflächendaten aus CAD-Daten des Fahrzeuginnenraums (1) erzeugt werden

8. Verfahren nach Anspruch 7, **dadurch** gekenntzeichnet dass die 3D-Oberflächendaten als triangulierte Oberflächenstruktur zur Verfügung gestellt werden.

9. Verfahren nach einem der Ansprüche 1 bis 6, **dadurch gekennzeichnet, dass** die 3D-Oberflächendaten durch eine Vermessung des Fahrzeuginnenraumes (1) erzeugt werden.

10. Verfahren nach Anspruch 9, **dadurch gekennzeichnet, dass** zur Vermessung des Fahrzeuginnenraumes (1) ein Photogrammetrieverfahren oder ein Streifenprojektionsverfahren oder Laser-Stripe-Sensoren verwendet werden.

11. Verfahren nach einem der Ansprüche 1 bis 10, **dadurch gekennzeichnet, dass** die ausgewählten Objekte zusätzliche spezielle und/oder signalisierende Objekte umfassen.

12. Verfahren nach Anspruch 11, **dadurch gekennzeichnet, dass** die Signalisierung ein statisches und/oder dynamisches Leuchten und/oder eine Objektform und/oder eine Objektreflektanz umfasst.

13. Verfahren nach einem der Ansprüche 1 bis 12, **dadurch gekennzeichnet, dass** die ausgewählten Objekte des Fahrzeuginnenraums (1) eine A- und/oder B- und/oder C-Säule der Karosserie und/oder eine Fahrzeugtür und/oder eine Mittelkonsole sind.

## Claims

1. Method for calibrating a sensor system (2) for monitoring the passenger compartment (1) of a vehicle, **characterized in that** current 3D measuring points (30, 31, 32) are measured and a spatial distance (40, 41, 42) between the measured 3D measuring points (30, 31, 32) and stored 3D surface data (20) of selected objects of the passenger compartment (1) of the vehicle is determined in order to calibrate the sensor system (2).

2. Method according to Claim 1, **characterized in that** the 3D measuring points (30, 31, 32) are measured by a video sensor, preferably a stereo video sensor.

3. Method according to Claim 1 or 2, **characterized in that** the 3D measuring points (30, 31, 32) are measured with structured illumination, preferably by the video sensor.

4. Method according to one of Claims 1 to 3, **characterized in that** the 3D measuring points (30, 31, 32) are measured by means of a phase measurement, preferably by the video sensor, wherein the passenger compartment (1) of the vehicle is illuminated with modulated light, and the phase of the reflected light is measured.

5. Method according to one of Claims 1 to 4, **characterized in that** the 3D measuring points (30, 31, 32) are measured by means of a transit time measurement, preferably by the video sensor, wherein the passenger compartment (1) of the vehicle is illuminated with pulsed light and the transit time of the reflected light is measured.

6. Method for calibrating a sensor system (2) for monitoring a passenger compartment (1) of a vehicle, **characterized in that** disparity measurements are carried out using the sensor system (2), and, in order to calibrate the sensor system (2), differences between the disparity measurements of the sensor system (2) and a disparity map are determined, which disparity measurements are produced from 3D surface data of selected objects of the passenger compartment (1) of the vehicle and stored.

7. Method according to one of Claims 1 to 6, **characterized in that** the 3D surface data are produced from CAD data of the passenger compartment (1) of the vehicle.

8. Method according to Claim 7, **characterized in that** the 3D surface data are made available as a triangulated surface structure.

9. Method according to one of Claims 1 to 6, **characterized in that** the 3D surface data are produced by measuring the passenger compartment (1) of the vehicle.

10. Method according to Claim 9, **characterized in that** a photogrammetry method or a stripe projection method or laser stripe sensors are used to measure the passenger compartment (1) of the vehicle.

11. Method according to one of Claims 1 to 10, **characterized in that** the selected objects comprise additional special and/or signalling objects.

12. Method according to Claim 11, **characterized in that** the signalling comprises static and/or dynamic illumination and/or an object shape and/or an object reflectance.

13. Method according to one of Claims 1 to 12, **characterized in that** the selected objects of the passenger compartment (1) of the vehicle are an A pillar and/or B pillar and/or C pillar of the vehicle bodywork and/or a vehicle door and/or a centre console.

## Revendications

1. Procédé de calibrage d'un ensemble de capteurs (2) pour surveiller l'habitacle d'un véhicule (1),
**caractérisé en ce qu'**
on mesure trois points de mesure actuels 3D (30, 31, 32) et pour le calibrage des capteurs (2) on détermine une distance spatiale (40, 41, 42) entre les points de mesure 3D (30, 31, 32) mesurés et les données de surfaces 3D, (20) enregistrées des objets sélectionnés dans l'habitacle (1) du véhicule.

2. Procédé selon la revendication 1,
**caractérisé en ce qu'**
on mesure les points de mesure 3D (30, 31, 32) avec un capteur vidéo, de préférence un capteur vidéo stéréo.

3. Procédé selon la revendication 1 ou 2,
**caractérisé en ce qu'**
on mesure les points de mesure 3D (30, 31, 32) sans un éclairage structuré, de préférence à l'aide d'un capteur vidéo.

4. Procédé selon l'une des revendications 1 à 3,
**caractérisé en ce qu'**
on mesure les points de mesure 3D (30, 31, 32) par une mesure de phase, de préférence avec un capteur vidéo, on éclaire l'habitacle (1) du véhicule avec une lumière modulée et on mesure la phase de la lumière réfléchie.

5. Procédé selon l'une des revendications 1 à 4,
**caractérisé en ce qu'**
on mesure les points de mesure 3D (30, 31, 32) par une mesure de temps de parcours, de préférence avec un capteur vidéo, on éclaire l'habitacle (1) du véhicule avec de la lumière pulsée et on mesure le temps de parcours de la lumière réfléchie.

6. Procédé de calibrage d'un ensemble de capteurs (2) pour surveiller l'habitacle (1) d'un véhicule,
**caractérisé en ce qu'**
on effectue des mesures de disparités à l'aide de l'ensemble de capteurs (2) et pour calibrer les ensembles de capteurs (2) on détermine les différences entre les mesures de disparités de l'ensemble de capteurs (2) et une carte de disparités, cette carte étant obtenue à partir de données de surfaces 3D d'objets sélectionnés dans l'habitacle (1) du véhicule et enregistrées.

7. Procédé selon l'une des revendications 1 à 6,
**caractérisé en ce qu'**
on génère des données de surfaces 3D à partir des données CAD de l'habitacle (1) du véhicule.

8. Procédé selon la revendication 7,
**caractérisé en ce qu'**
on fournit les données de surfaces 3D comme structures de surfaces triangulées.

9. Procédé selon l'une des revendications 1 à 6,
**caractérisé en ce qu'**
on génère les données de surfaces 3D en mesurant l'habitacle (1) du véhicule.

10. Procédé selon la revendication 9,
**caractérisé en ce que**
pour mesurer l'habitacle (1) du véhicule on utilise un procédé de photogrammétrie ou un procédé de projection de bandes ou encore des capteurs à bande laser.

11. Procédé selon l'une des revendications 1 à 10,
**caractérisé en ce que**
les objets sélectionnés comprennent des objets supplémentaires spéciaux et/ou résultent d'une signalisation.

12. Procédé selon la revendication 11,
**caractérisé en ce que**
la signalisation consiste en un éclairage statique et/ou dynamique et/ou une forme d'objet et/ou une réflexion d'objet.

13. Procédé selon l'une des revendications 1 à 12,
**caractérisé en ce que**
les objets sélectionnés dans l'habitacle (1) du véhicule sont la colonne A et/ou la colonne B et/ou la colonne C de la carrosserie et/ou une portière du véhicule et/ ou la console centrale.
